# EUROPÄISCHE PATENTANMELDUNG

(11) **EP 1 935 549 A2**
(43) Veröffentlichungstag der Anmeldung: **25.06.2008**
(21) Anmeldenummer: 07024502.2
(22) Anmeldetag: 18.12.2007
(51) Int. Cl.: B23K 11/25, G01N 27/04

(54) **Vorrichtung und Verfahren zum Widerstandsschweißen**

(30) Priorität: 18.12.2006 DE 102006060197
(71) Anmelder: MV Marketing und Vertriebs-GmbH & Co. KG Wieländer & Schill, 78054 Villingen-Schwenningen (DE)
(72) Erfinder: Rusch, Hans-Jürgen, 28876 Oyten (DE); Strasser, Martin, 78073 Bad Dürrheim (DE)
(74) Vertreter: Herden, Andreas F.

(57) **Zusammenfassung**

Die Erfindung betrifft ein Widerstandsschweißgerät sowie ein Verfahren zum Bestimmen der Art eines zu schweißenden Bleches. Dabei wird ein Impedanzverlauf aufgenommen, welcher mit Referenzimpedanzverläufen verglichen wird und so die Art eines zu schweißenden Bleches bestimmt werden kann.

## Beschreibung

### Gebiet der Erfindung

Die Erfindung betrifft ein Widerstandsschweißgerät, ein Verfahren zum Fügen von Bauteilen, insbesondere zum Widerstandsschweißen, sowie ein Verfahren zum Bestimmen der Art eines Bleches.

### Hintergrund der Erfindung

Schweißverfahren, insbesondere Widerstandsschweißverfahren sind bekannt. Beim Widerstandsschweißen werden die zu verbindenden Bauteile vom elektrischen Strom durchflossen und durch Widerstandserwärmung in der Schweißzone aufgeschmolzen. Insbesondere betrifft die Erfindung das Punktschweißen, welches der punktweisen Verbindung von Blechen dient und wobei der Strom über Druckelektroden zugeführt wird. Der Gegenstand der Erfindung kann aber auch beim Rollennahtschweißen Verwendung finden. Die Erfindung lässt sich aber auch auf andere thermische Schweißverfahren, wie Induktionsschweißen oder Ultraschallschweißen erweitern.

Thermische Schweißverfahren erfordern eine Abstimmung der Prozessparameter des Schweißverfahrens auf die zu verbindenden Bleche. Unter Prozessparametern im Sinne der Erfindung werden insbesondere die Stromstärke, der Verlauf der Stromstärke, die anliegende Schweißspannung, der Spannungs-/Stromverlauf, insbesondere einzelne oder intervallweise Strom/Spannungsstöße, der von den Elektroden auf die Bauteile ausgeübte Druck etc. verstanden.

Vom Grundsatz her sollen beim Widerstandsschweißen die Bleche soweit erwärmt werden, dass sich eine Schweißlinse beziehungsweise beim Rollennahtschweißen eine Schweißnaht bildet. Beim Punktschweißen wird als untere Grenze ein Durchmesser des Schweißpunktes von etwa 4·√*t*, wobei t die Blechdicke ist, als noch ausreichend erachtet.

Ein zu niedriger Schweißstrom oder eine zu kurze Prozesszeit führt in der Regel zu einer unzureichenden Verbindung der Bauteile, wohingegen insbesondere eine zu hohe Stromstärke oder ein zu kleiner Anpressdruck zu Spritzern führen kann.

In den letzten Jahren wurden allerdings insbesondere im Fahrzeugbau eine ganze Reihe von neueren Blechsorten eingeführt. Es handelt sich dabei beispielsweise um Mehrphasenstähle, welche auch als hoch- oder höchstfeste Stähle bezeichnet werden und so den Einsatz dünnerer Bleche bei gleichzeitig erhöhter Festigkeit im Karosseriebau zulassen.

Um diese neuen Bleche zusammenfügen zu können, muss der Schweißer die Art, beispielsweise die Bezeichnung, die Qualität, Oberflächenbeschichtung etc. des Bleches kennen, um die Prozessparameter entsprechend anpassen zu können. So sind beispielsweise Mehrphasenstähle schlechter schweißbar, als dies bei herkömmlichen weichen Tiefziehblechen der Fall ist, weil die hoch- und höchstfesten Bleche einen verkleinerten Schweißbereich aufweisen, innerhalb dessen der Schweißvorgang als ordnungsgemäß angesehen wird.

Als problematisch hat sich gezeigt, dass insbesondere beim Reparaturschweißen die an einer Karosserie verwendeten Bleche zumeist nicht bekannt sind. Der Schweißer hat in der Regel keine Angaben zu den Prozessparametern und muss daher entweder aufwändige Testschweißungen durchführen, was die Zerstörung von Testbauteilen zur Folge hat, oder er verwendet Prozessparameter, welche sich auf weiche Tiefziehbleche beziehen, was insbesondere bei höchstfesten Blechen zu Schweißfehlern führen kann.

Die deutsche Patentschrift DE 103 34 478 B4 zeigt ein Verfahren und eine Vorrichtung zum Widerstandsschweißen, wobei in einer Testphase eine Prozessimpedanz ermittelt und mit einer Sollimpedanz vergleichen wird. Bei Überschreiten einer Sollimpedanz wird eine Vorwärmphase eingeleitet, in welcher die Bleche freigebrannt und so auf das Setzen des Schweißpunktes vorbereitet werden sollen.

Auch dieses Verfahren ermöglicht keine Einstellung der Prozessparameter auf bestimmte Blecharten. Das in dieser Druckschrift beschriebene Verfahren zum Widerstandsschweißen kann insbesondere bei höchstfesten Blechen sogar zu einer deutlichen Verschlechterung der Qualität des Schweißpunktes führen, weil es zu einem überhöhten Energieeintrag kommen kann, der die Materialeigenschaften negativ verändert.

### Aufgabe der Erfindung

Der Erfindung liegt demgegenüber die Aufgabe zugrunde, die genannten Nachteile des Standes der Technik zu reduzieren.

Insbesondere ist es Aufgabe der Erfindung, ein Verfahren bereitzustellen, mit welchem die Art eines zu schweißenden Bleches beziehungsweise die Art von zu schweißenden Blechen bestimmt werden kann und so die Prozessparameter des Fügevorgangs optimal an die jeweiligen Blechsorten angepasst werden können.

Eine weitere Aufgabe der Erfindung ist es, ein Widerstandsschweißgerät bereitzustellen, welches eine weitgehend automatische Einstellung der Prozessparameter ermöglicht.

### Zusammenfassung der Erfindung

Die Aufgabe der Erfindung wird bereits durch ein Widerstandsschweißgerät, ein Verfahren zum Fügen von Bauteilen sowie ein Verfahren zum Bestimmen der Art eines Bleches nach einem der unabhängigen Ansprüche erreicht.

Bevorzugte Ausführungsformen und Weiterbildungen der Erfindung sind den jeweiligen Unteransprüchen zu entnehmen.

Die Erfindung umfasst ein Widerstandsschweißgerät, welches zumindest zwei Elektroden zum Widerstandsschweißen aufweist. Insbesondere betrifft die Erfindung ein Punktschweißgerät, aber auch Rollennahtschweißgeräte gehören zum Gegenstand der Erfindung.

Der Gegenstand der Erfindung ist unabhängig von der Art der verwendeten Stromquelle. So kann das Schweißgerät beispielsweise ein 50 Hz Wechselstrom-Schweißgerät, ein Schweißgerät mit einer Gleichstromquelle oder einer Mittelfrequenz-Inverterstromquelle sein.

Gemäß der Erfindung weist das Widerstandsschweißgerät Mittel auf, um einen Impedanzverlauf zumindest eines zu schweißenden Bleches aufzunehmen und/oder anzuzeigen . Unter einem Impedanzverlauf wird im Regelfall der Verlauf der Impedanz in einem bestimmten Zeitintervall verstanden. Im Sinne der Erfindung ist aber auch umfasst, die Impedanz gegen eine andere Referenzgröße, beispielsweise die Temperatur, Elektrodenkraft und/oder Elektrodenweg bzw. - abstand des zu prüfenden Bleches aufzutragen. Der Impedanzverlauf kann über einen Quotienten von Strom und Spannung ermittelt werden. Im einfachsten Fall können Spannungs- und Stromverläufe miteinander dividiert werden. Die Mittel zum Anzeigen des Impedanzverlaufs umfassen vorzugsweise ein Display und/oder einen Drucker. Die Mittel zum Aufnehmen des Impedanzverlaufs umfassen vorzugsweise einen Datenspeicher.

Entscheidend für den aufgenommenen Spannungsverlauf ist die Stelle, an der die Spannung gemessen wird.

Der Spannungsverlauf braucht aber nicht notwendigerweise direkt an der Elektrodenspitze gemessen zu werden, sondern kann beispielsweise auch am Elektrodenanschluss im Schweißgerät selbst gemessen werden.
Dies kann zwar aufgrund der Induktivitäten der Schweißzangen zu einer Veränderung des Impedanzverlaufs führen, die Möglichkeit der Bestimmung der Blechart wird hierdurch aber nicht negativ beeinflusst.

Durch die Anzeige des Impedanzverlaufs beispielsweise auf einen am oder in der Nähe des Schweißgerätes angebrachten Display wird ein Vergleich des ermittelten Impedanzverlaufs mit Referenzimpedanzläufen ermöglicht. So kann der Schweißer beispielsweise ein Handbuch zu Hilfe nehmen und den Impedanzverlauf am Werkstück mit abgedruckten Referenzimpedanzläufen vergleichen.

Die Referenzimpedanzverläufe können aber auch, wie es bei einer besonderen Aufgabe der Erfindung vorgesehen ist, im Gerät selbst gespeichert sein und beispielsweise für einen schnellen Vergleich ebenfalls an einem Display angezeigt werden.

Die Erfindung betrifft also ein Widerstandsschweißgerät sowie ein Verfahren zum Bestimmen der Art eines zu schweißenden Bleches, wobei ein Impedanzverlauf aufgenommen wird, welcher mit Referenzimpedanzverläufen verglichen wird und so die Art eines zu schweißenden Bleches bestimmt wird.

Die aufgenommenen und gespeicherten oder ausgegebenen Impedanzverläufe können direkt zur Bewertung herangezogen werden oder mit Referenzimpedanzverläufen, beispielsweise in einem in Papierform vorliegendem Handbuch verglichen werden.

Im Zusammenhang mit aufgenommenen und gespeicherter Impedanzverläufen wird im Idealfall eine automatische Verarbeitung ermöglicht, so dass das Gerät selbst erkennt, um was für eine Blechart es sich handelt oder dem Schweißer anhand eines Vergleiches des gemessenen Impedanzverlaufes mit Differenz-Impedanzverläufen Vorschläge macht, um welche Blechart es sich handeln könnte. Eine derartige Verarbeitung beispielsweise durch einen Microcontroller kann entweder im Gerät selbst oder in einem am Gerät angeschlossenen Microcontroller, welcher dann im Sinne der Erfindung Teil des Widerstandsschweißgerätes ist, erfolgen.

Vorzugsweise erfolgt die Ermittlung einer Blechart durch einen Vergleich von Referenzimpedanzverläufen mit dem gemessenen Impedanzverlauf automatisch.

Bei einer bevorzugten Ausführungsform der Erfindung wird der Vergleich von Referenzimpedanzverläufen mit dem gemessenen Impedanzverlauf derart durchgeführt, dass das Bezugs- bzw. Koordinatensystem der Kurve des gemessenen Impedanzverlaufes in eine begrenzte Anzahl von Feldern eingeteilt wird. Über die Ermittlung, welche Felder von der Kurve durchlaufen und/oder welche Felder nicht durchlaufen werden, ist eine relative einfache automatische Bestimmung der Blechart möglich.

Es versteht sich, dass im Sinne der Erfindung aber auch andere mathematische Verfahren verwendet werden können, zum Beispiel Interpolationsverfahren, Ableitungen der aufgenommenen Kurve als Vergleichsbasis etc.

Unter einer Blechart im Sinne der Erfindung wird eine Einteilung verstanden, welche ein zu schweißendes Blech gattungsmäßig charakterisiert. Dabei sind verschiedene Einteilungen denkbar, beispielsweise als grobe Einteilung, weiche Tiefziehbleche, Mehrphasenstähle" Aluminiumbleche, beschichtete Stahlbleche etc. Die Erfindung ermöglicht aber auch die differenziertere Unterscheidung verschiedener Stahlbleche, insbesondere von Bohrstählen, Komplex-Phasenstählen, Dual-Phasenstählen etc..

Das erfindungsgemäße Widerstandsschweißgerät ist insbesondere zur Verarbeitung von hochfesten und höchstfesten Stählen geeignet.

Bei einer Weiterbildung der Erfindung weist das Widerstandsschweißgerät Mittel zum Messen des Elektrodenabstandes auf. Neben der Blechart ist die Blechdicke eine wichtige Materialgröße für die Einstellung der Prozessparameter des Schweißvorgangs. Durch eine Messung des Elektrodenabstandes muss die Blechdicke nicht manuell gemessen und eingegeben werden, sondern kann über die Schweißzange bestimmt werden, was insbesondere bei einer automatischen Einstellung der Prozessparameter einen völligen Verzicht auf manuelle Eingaben ermöglicht.

Bei einer Weiterbildung der Erfindung weist das Widerstandsschweißgerät ferner Mittel zum Messen der Anpresskraft der Elektroden auf. Die Anpresskraft der Elektroden beeinflusst ebenfalls den Impedanzverlauf in hohem Maße. Sofern die Anpresskraft bei der Bestimmung der Blechart berücksichtigt wird, ist eine höhere Genauigkeit der Messung möglich. Weiter kann das Gerät auch bei zu geringer Anpresskraft der Elektroden eine Fehlermeldung ausgeben und den Schweißer veranlassen, die Anpresskraft zu ändern.

Bei einer bevorzugten Ausführungsform der Erfindung weist das Widerstandsschweißgerät einen Datenspeicher auf, in welchem Prozessparameter wie insbesondere Schweißstrom und Schweißzeit für die Bearbeitung einer Mehrzahl von Blecharten, Blechkombinationen und/oder Blechdicken ablegbar sind. Dadurch wird es möglich, allein durch die Eingabe von Blechdicke und Blechart für jedes einzelne Blech optimierte Prozessparameter auszuwählen. Das Widerstandsschweißgerät wählt dann für die eingestellte Blechkombination die geeigneten Prozessparameter aus. Bei einer automatischen Bestimmung der Blecharten und Blechdicken ist sogar gar kein manueller Eingriff mehr erforderlich.

Die Erfindung betrifft des Weiteren ein Verfahren zum Fügen von Bauteilen, insbesondere zum Widerstandsschweißen, wobei das Verfahren vorzugsweise mittels eines erfindungsgemäßen Widerstandsschweißgerätes vorgenommen wird.

Bei dem erfindungsgemäßen Verfahren wird eine Spannung, zumindest an einem zu fügenden Teil mittels zweier Elektroden angelegt, so dass ein Strom fließt, welcher zumindest zu einer Erwärmung des zu fügenden Teils führt. Dabei wird ein Strom-Zeit und/oder Spannung-Zeit-Verlauf gemessen, über welchen der Widerstands- beziehungsweise Impedanzverlauf des Bauteils bestimmbar ist. Über den Strom-Zeit und/oder Spannung-Zeit-Verlauf, insbesondere über einen darüber ermittelten Impedanzverlauf können Materialeigenschaften des zu fügenden Bauteils, insbesondere die Art des zu fügenden Bauteils bestimmt werden.

Infolge der Kenntnis der Materialeigenschaften, insbesondere der Blechart, können sodann, wie es bei einer bevorzugten Ausführungsform des Verfahrens vorgesehen ist, die Prozessparameter des Fügeverfahrens bestimmt werden. Beim Widerstandsschweißen umfassen die Prozessparameter insbesondere den Strom-Zeit-Verlauf. Wichtig beim Setzen von Schweißpunkten ist vor allem die Energie, die dem Schweißpunkt zugeführt wird. Insbesondere wenn Bleche mit hohem spezifischen Widerstand mit Blechen mit niedrigerem spezifischen Widerstand verschweißt werden sollen, umfassen die Prozessparameter aber auch das Pulsen des Schweißstroms, um ein optimales Ergebnis zu erzielen.

Der Widerstandsverlauf, insbesondere der Impedanzverlauf wird vorzugsweise an einem Bildschirm angezeigt. Über einen manuellen Vergleich mit Referenzwiderstandsverläufen kann so auf die Art eines zu fügenden Bleches geschlossen werden.

Bei einer Weiterbildung der Erfindung wird neben dem Strom-Zeit und/oder Spannung-Zeit-Verlauf die Dicke des oder der Bauteile gemessen. Diese Dicken, insbesondere Blechdicken, werden sodann bei der Bestimmung der Prozessparameter berücksichtigt.

Bei einer Weiterbildung der Erfindung werden die zu fügenden Bauteile in die endgültige Schweißposition gebracht. Sodann wird vorzugsweise mittels der Elektroden eines Punktschweißgerätes Spannung auf beide zu fügenden Bauteile angelegt. Es wird also dabei nicht der Impedanzverlauf der einzelnen Bleche im Vorfeld aufgenommen, sondern es wird ein Impedanzverlauf von den beiden oder mehreren Bauteilen, insbesondere während der Schweißung, ermittelt.

Insbesondere mittels eines Microcontrollers ist es vorgesehen, aus dem Widerstandsverlauf beider bzw. mehrerer Bauteile auf den Widerstandsverlauf der einzelnen Bauteile, insbesondere der einzelnen Bleche zu schließen. Diese Vorgehensweise hat den Vorteil, das auf ein einzelnes Prüfen beider Bleche verzichtet werden kann und so das Verfahren direkt an der Schweißstelle angewendet werden kann.

Die Berechnung der Impedanzverläufe der einzelnen Bauteile erfolgt vorzugsweise wiederum unter Berücksichtigung von Referenzwiderstandsverläufen.

Um charakteristische Impedanzverläufe zu messen, mit welchen die Art insbesondere eines Bleches bestimmt werden kann, wird vorzugsweise eine Spannung angelegt, die zu einem Strom führt, der das zu fügende Teil zwischen den Elektroden auf mindestens 300°C erwärmt.

Im Sinne der Erfindung kann der Prüfpunkt sowohl an einer Stelle sitzen, an welcher ein Schweißpunkt gesetzt werden soll, als auch an einer beliebigen anderen Stelle des Bleches.

Bei einer Weiterbildung der Erfindung wird neben dem Strom-Zeit und/oder Spannung-Zeit-Verlauf auch die Anpresskraft der Elektroden gemessen.

Bei einer Weiterbildung der Erfindung ist vorgesehen, während der Messphase den Strom zu verändern, insbesondere den Strom kontinuierlich, stufenweise oder in Intervallen zu erhöhen und/oder zu verringern. So können Impedanzverläufe gewonnen werden, welche eine noch genauere Eingrenzung einer Blechart ermöglichen.

Weiter betrifft die Erfindung ein Verfahren zur Bestimmung der Art eines Bleches, bei welchem mittels zumindest zwei Elektroden eine Spannung an das Blech angelegt wird, so dass durch das Blech ein Strom fließt, der zumindest zu einer Erwärmung des Bleches führt, der Widerstandsverlauf zumindest abschnittsweise während des Spannungsanlegens gemessen wird und sodann durch einen Vergleich mit Referenzwiderstandsverläufen die Art des Bleches bestimmt wird. Das Verfahren zur Bestimmung eines Bleches kann mit sämtlichen vorstehend beschriebenen Merkmalen des Verfahrens zum Fügen von Bauteilen oder des Widerstandsicherheitsgerätes kombiniert werden.

Als Stromquelle wird vorzugsweise die Standardstromquelle des Widerstandsschweißgerätes genutzt. Alternativ sind spezielle Messstromquellen vorgesehen.
Es wird durch das zu prüfende Blech ein Strom fließen gelassen, welcher vorzugsweise mehr als 1 kA beträgt.

Bei einer Weiterbildung des Verfahrens können auch zwei Bleche, welche insbesondere danach verschweißt werden sollen, geprüft werden. Da so ein Impedanzverlauf beider in Reihe geschalteten Bleche gewonnen wird, ist in der Regel dann eine elektronische Auswertung erforderlich.

### Beschreibung der Zeichnungen

Die Erfindung soll im Folgenden anhand der Zeichnungen Fig. 1 bis Fig. 6 näher erläutert werden.
- Fig. 1: zeigt schematisch, wie mit einem erfindungsgemäßen Widerstandsschweißgerät zwei Bleche geprüft und verschweißt werden,
- Fig. 2: zeigt schematische Darstellungen des Impedanzverlaufes verschiedener Stahlarten,
- Fig. 3 und 4: zeigen schematisch die Schritte, die ein Schweißer bei der Ausführung des erfindungsgemäßen Verfahrens mittels eines beispielhaften Schweißgerätes vornimmt,
- Fig. 5: zeigt schematisch, wie mit einer alternativen Ausführungsform eines Widerstandsschweißgerätes zwei Bleche geprüft und verschweißt werden,
- Fig. 6: zeigt ein Flussdiagramm der wichtigsten Verfahrensschritte eines erfindungsgemäßen Verfahrens zum Fügen von Bauteilen.

### Detaillierte Beschreibung der Zeichnungen

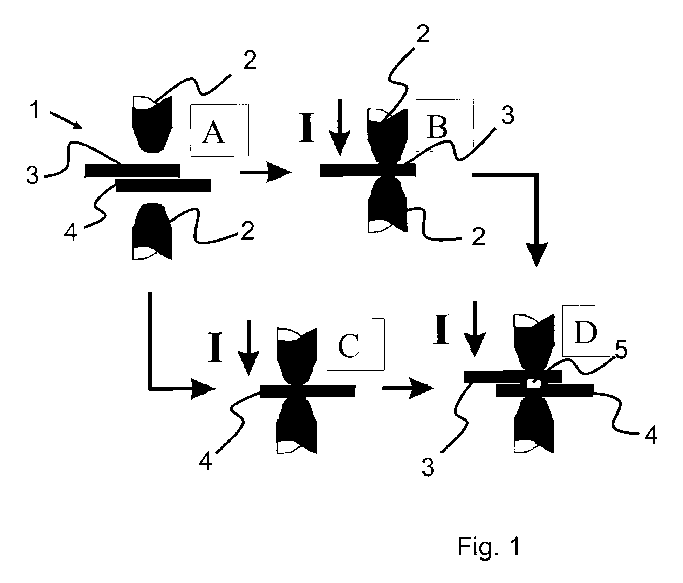

Bezug nehmend auf Fig. 1 soll erläutert werden, wie mittels eines erfindungsgemäßen Widerstandsschweißgerätes 1 zwei Bleche 3, 4 geprüft und verschweißt werden. Die einzelnen Schritte sind mit A bis D bezeichnet. Im Schritt A ist ein Widerstandsschweißgerät 1 schematisch dargestellt, welches zwei Elektroden 2 umfasst. Mittels der Elektroden 2 soll eine Punktschweißverbindung gesetzt werden, mit welcher die Bleche 3 und 4 verbunden werden. Die Elektroden 2 sind in der Darstellung A noch nicht auf die Bleche 3, 4 aufgesetzt.

In einem ersten Schritt B werden die Elektroden 2 auf das obere Blech 3 aufgesetzt. Sodann wird eine Spannung angelegt, so dass ein Strom fließt, welcher das Blech 3 erwärmt. Es wird vorzugsweise aber kein Strom gewählt der zu einer so hohen Erwärmung führt, dass das Blech am Schweißpunkt seinen Aggregatzustand ändert. Über den Impedanzverlauf kann sodann entweder manuell oder mittels eines Microcontrollers die Art des Bleches 3 bestimmt werden (nicht dargestellt).

Wie in Schritt C dargestellt, wird das zweite untere Blech 4 entsprechend geprüft, also ebenfalls ein Impedanzverlauf gemessen und die Art des Bleches bestimmt.

Sodann werden unter Berücksichtigung der Blechdicken und der ermittelten Blecharten die Prozessparameter des Fügevorgangs im Widerstandsschweißgerät 1 eingestellt (nicht dargestellt) und wie in Schritt D dargestellt, werden die Bleche 3, 4 verschweißt, so dass sich eine Schweißlinse 5 bildet.

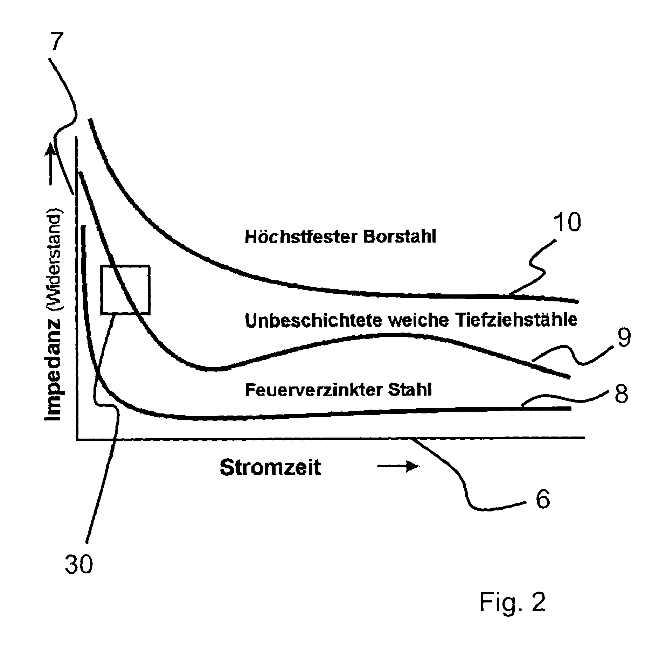

Fig. 2 zeigt schematisch die Impedanzverläufe verschiedener Stahlarten. Die x-Achse 6 gibt dabei die Zeit, in der Strom fließt, wieder, wohingegen die y-Achse 7 die Impedanz darstellt. Kurve 9 zeigt den typischen Impedanzverlauf eines unbeschichteten weichen Tiefziehstahls.

Zu erkennen ist, dass die hier beispielhaft verwendeten anderen Bleche feuerverzinkter Stahl und höchstfester Bohrstahl andere Impedanzverläufe haben.

So hat das feuerverzinkte Stahlblech 8 eine geringere Impedanz als das Tiefziehblech 9. Der Impedanzabfall in der Anfangsphase ist beim feuerverzinkten Stahlblech besonders ausgeprägt, da das Zink eine sehr gute Wärmeleitung hat.

Der höchstfeste Bohrstahl 10 hat dagegen eine wesentlich höhere Impedanz und der Abfall der Impedanz beim Erwärmen des Bleches verläuft wesentlich flacher.

Durch Vergleich des Impedanzverlaufs an einem Prüfpunkt mit entsprechen Referenzkurven lässt sich auf die Art des verwendeten Bleches schließen.
Eine relativ einfache automatische Bestimmung der Blechart kann beispielsweise durch Einteilung des in Fig. 2 dargestellten Koordinatensystems in Felder (nicht dargestellt) erfolgen. Die Kurven 8, 9 und 10 durchlaufen wegen ihres unterschiedlichen Verlaufs verschiedene Felder, wodurch eine automatische Erkennung möglich ist. Die Felder brauchen dabei nicht regelmäßig verteilt zu werden, sondern es genügt das Setzen von Feldern an charakteristischen Stellen des Impedanzverlaufs. Beispielsweise kann in dieser schematischen Darstellung durch Setzen eines Feldes 30 im Bereich des anfänglichen Impedanzabfalls der Kurve 9 die Blechart bestimmt werden. Läuft die Kurve dann durch das Feld 30, so handelt es sich um weichen Tiefziehstahl. Läuft die Kurve rechts an dem Feld vorbei, so handelt es sich um einen höchstfesten Borstahl, während es sich um einen feuerverzinkten Stahl handelt, wenn die Kurve links an dem Feld 30 vorbei läuft.

Es versteht sich, dass in der Praxis ein einziges Feld keine zuverlässige Erkennung der Blechart ermöglich, es hat sich aber gezeigt, dass bereits über vier Felder eine recht zuverlässige Erkennung der verwendeten Blecharten möglich ist.

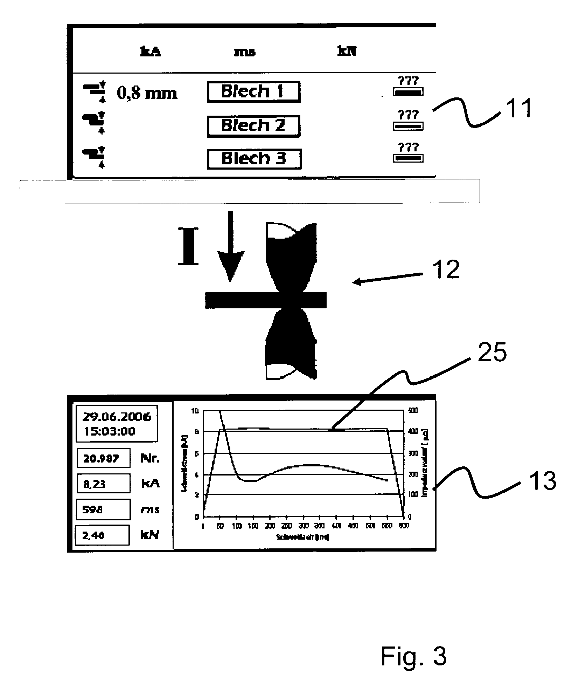

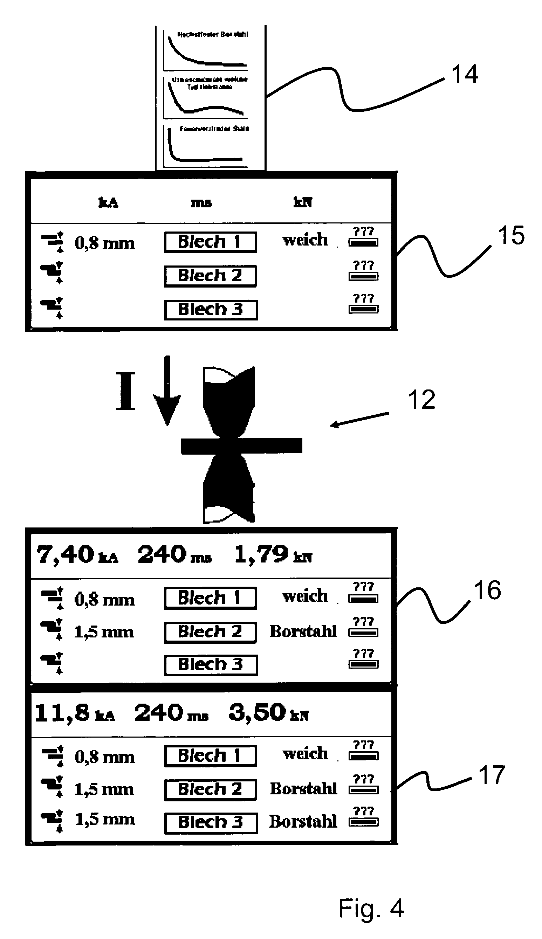

Ein Ausführungsbeispiel des erfindungsgemäßen Verfahrens soll Bezug nehmend auf die Figuren Fig. 3 und Fig. 4 beispielhaft erläutert werden.

Wie in Fig. 3 schematisch dargestellt ist, kann in einem ersten Schritt beispielsweise auf einem Display eine Blechdicke eines ersten zu verschweißenden Bleches eingegeben werden 11.

Diese Blechdicke dient zum einen der späteren Weiterverarbeitung des Bleches, zum anderen kann, wie es bei einer besonderen Ausführungsform der Erfindung vorgesehen ist, der Strom zum Aufnehmen des Impedanzverlaufs auch der Blechdicke angepasst werden, um nicht schon in der Prüfphase zu viel Energie in das Blech einzutragen. Darüber hinaus ist die Blechdicke ein wichtiges Kriterium für die Form der Kurve.

Im nächsten Schritt werden die Elektroden auf das eine Blech aufgesetzt und es fließt ein Strom 12.

Sodann wird auf dem Widerstandsschweißgerät ebenfalls in einem Display ein Impedanzverlauf ausgegeben. Neben dem Impedanzverlauf wird auf dem Display der Stromverlauf 25 angegeben. Dies dient als Kontrolle, dass während der gesamten Messung ein ausreichender Kontakt der Elektroden vorhanden war.

In einem Katalog oder im Display (nicht dargestellt) können sodann Referenzimpedanzverläufe 14 angezeigt werden, welche der Schweißer mit dem gemessenen Impedanzverlauf 13 vergleicht und so die Art des zu schweißenden Bleches bestimmt. Im vorliegenden Beispiel wählt der Schweißer als erstes Blech ein weiches Tiefziehblech 15.

Nunmehr werden vorstehend genannte Schritte mit dem zweiten Blech wiederholt. Es wird ein Strom fließen gelassen 12, der Impendanzverlauf aufgenommen und die Art des zu schweißenden Bleches durch einen Vergleich mit Referenzwerten bestimmt. Aufgrund des Impedanzverlaufs wurde hier als zweites Blech Borstahl ausgewählt 16.

Für eine Drei-Blech-Verbindung kann auch noch ein drittes Blech geprüft und ausgewählt werden 17.

Im vorliegenden Ausführungsbeispiel passt das Widerstandsschweißgerät anhand der Blechdicken und anhand der eingegebenen Blecharten die Prozessparameter des Schweißverfahrens selbst an, das heißt der Schweißer braucht nicht Stromstärke, Stromverlauf und Stromdauer auszuwählen.

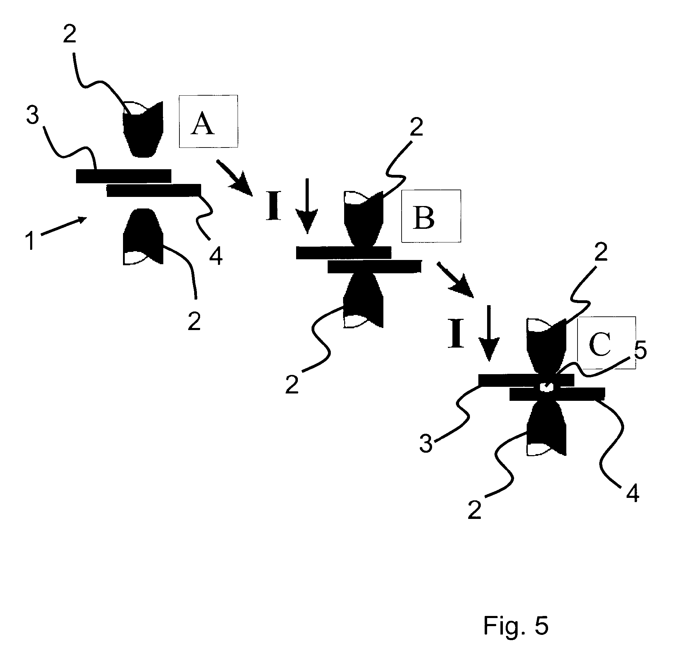

Bezug nehmend auf Fig. 5 soll eine alternative Ausführungsform der Erfindung näher erläutert werden.

Die einzelnen Prozessschritte sind mit A bis C beschriftet. Wie in A zu sehen ist, ist wiederum ein Widerstandsschweißgerät 1 mit zwei Elektroden 2 vorgesehen, um zwei zu schweißende Bleche 3, 4 durch eine Punktverbindung zu verschweißen.

Im Unterschied zu den vorstehend geschilderten Ausführungsformen wird hier in Schritt B nicht der Impedanzverlauf eines einzelnen zu prüfenden Bleches aufgezeichnet, sondern die Elektroden 2 werden direkt auf die Schweißstelle aufgesetzt und der Impedanzverlauf beider Bleche wird so aufgenommen.

Über eine elektronische Auswerteeinheit (nicht dargestellt) ist es nunmehr möglich, aus diesem kombinierten Impedanzverlauf auch auf die Impedanzverläufe der einzelnen Bleche beziehungsweise auf die Art der einzelnen Bleche zu schließen.

Das Widerstandsschweißgerät 1, welches vorzugsweise über Mittel zur Messung des Elektrodenabstandes (nicht dargestellt) verfügt, kann nunmehr eine automatische Anpassung der Prozessparameter vornehmen und in Schritt C wird eine Schweißlinse 5 aufgeschmolzen. Dabei brauchen die Elektroden 2 des Widerstandsschweißgerätes 1 nicht von der Schweißstelle abgehoben zu werden.

Vorzugsweise wird bei der Auswahl der Prozessparameter die bereits durch die Impedanzmessung in das Blech eingebrachte Energie berücksichtigt, das heißt, sofern die Elektroden nicht wieder abgehoben werden, wird dem Blech weniger Energie zugeführt.

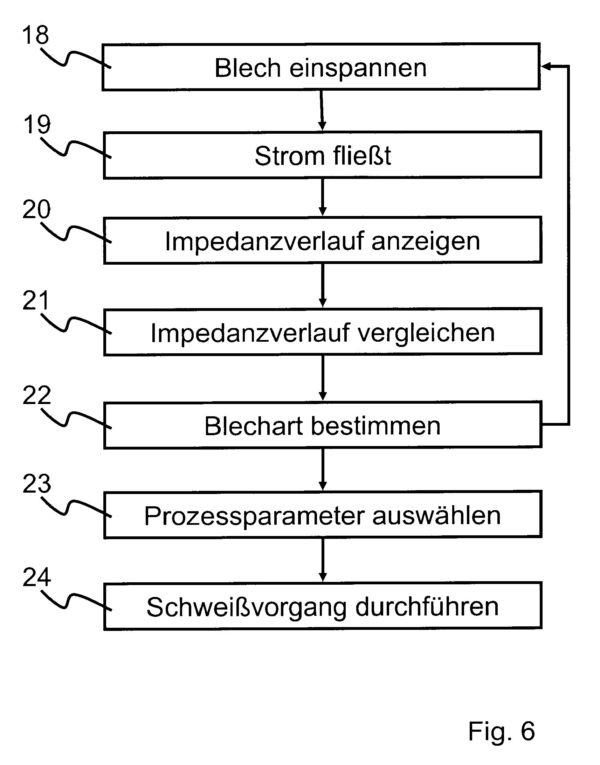

Bezug nehmend auf Fig. 6 sollen anhand eines Flussbildes die wesentlichen Verfahrensschritte eines Ausführungsbeispiels der Erfindung näher erläutert werden.

In einem ersten Schritt wird ein Blech zwischen den Elektroden eingespannt 18. Sodann wird eine Spannung an den Elektroden angelegt, so dass ein Strom fließt 19.

Durch Messung von Strom- und Spannungsverlauf wird ein Impedanzverlauf ermittelt und angezeigt 20. Der angezeigte Impedanzverlauf wird mit Referenzimpedanzverläufen verglichen 21 und durch den Vergleich die Blechart bestimmt 22. Nach Bestimmen der Art des ersten Bleches kann sodann ein zweites bzw. weiteres Blech eingespannt werden und wieder bei Schritt 18 begonnen werden.

Nachdem die Art der Bleche bestimmt ist, werden die geeigneten Prozessparameter entweder manuell oder automatisch ausgewählt 23 und sodann der Schweißvorgang mit den gewählten Prozessparametern 24 durchgeführt.

Die Erfindung ermöglicht so insbesondere beim Reparaturschweißen eine genaue Anpassung der Prozessparameter auf die zu schweißenden Blecharten. Dabei ist es nicht erforderlich, dass dem Schweißer die Art der verwendeten Bleche bekannt ist.

Es versteht sich, dass die Erfindung nicht auf eine Kombination der Merkmale vorstehend beschriebener Ausführungsbeispiele beschränkt ist, sondern dass der Fachmann sämtliche beschriebenen Merkmale, soweit dies sinnvoll ist, kombinieren wird.

### Bezugszeichenliste:

- 1: Widerstandsschweißgerät
- 2: Elektrode
- 3: 1. Blech
- 4: 2. Blech
- 5: Schweißlinse
- 6: x-Achse
- 7: y-Achse
- 8: Impedanz feuerverzinkter Stahl
- 9: Impedanz Tiefziehstahl
- 10: Impedanz Borstahl
- 11: Blechdicke eingeben
- 12: Strom fließt
- 13: Impedanzverlauf 1. Blech
- 14: Referenzimpedanzverläufe
- 15: Art 1. Blech auswählen
- 16: Art 2. Blech auswählen
- 17: Art 3. Blech auswählen
- 18: Blech einspannen
- 19: Strom fließt
- 20: Impedanzverlauf anzeigen
- 21: Impedanzverlauf vergleichen
- 22: Blechart bestimmen
- 23: Prozessparameter auswählen
- 24: Schweißvorgang durchführen
- 25: Stromverlauf

## Patentansprüche

1. Widerstandsschweißgerät, insbesondere Punktschweißgerät, umfassend zumindest zwei Elektroden und Mittel, um einen Widerstandsverlauf, insbesondere einen Impedanzverlauf, zumindest eines zu schweißenden Bleches aufzunehmen und/oder anzuzeigen, um eine Bestimmung der Blechart zu ermöglichen.

2. Widerstandsschweißgerät nach dem vorstehenden Anspruch, **dadurch gekennzeichnet, dass** das Widerstandsschweißgerät Mittel zum Vergleich eines Impedanzverlaufes mit Referenzimpedanzläufen sowie Mittel zur Bestimmung einer Blechart anhand des Vergleiches aufweist.

3. Widerstandsschweißgerät nach einem der vorstehenden Ansprüche, **dadurch gekennzeichnet, dass** das Widerstandsschweißgerät Mittel zum Messen des Elektrodenabstandes aufweist.

4. Widerstandsschweißgerät nach einem der vorstehenden Ansprüche, **dadurch gekennzeichnet, dass** das Widerstandsschweißgerät Mittel zum Messen der Anpresskraft der Elektroden aufweist.

5. Widerstandsschweißgerät nach einem der vorstehenden Ansprüche, **dadurch gekennzeichnet, dass** das Widerstandsschweißgerät einen Datenspeicher aufweist, in dem Prozessparameter, insbesondere Schweißstrom, Anpresskraft der Elektroden, Elektrodenform und/oder Schweißzeit, für die Bearbeitung einer Mehrzahl von Blecharten, Blechkombinationen und/oder Blechdicken ablegbar sind.

6. Widerstandschweißgerät nach dem vorstehenden Anspruch, **dadurch gekennzeichnet, dass** das Widerstandschweißgerät Mittel zum automatischen Auswählen von Prozessparametern auf Basis des Impedanzverlaufs aufweist.

7. Widerstandschweißgerät nach einem der vorstehenden Ansprüche, **dadurch gekennzeichnet, dass** das Widerstandschweißgerät Mittel zum Speichern und/oder Ausgeben von Impedanzverläufen des und/oder der Schweißvorgänge aufweist.

8. Widerstandschweißgerät nach einem der vorstehenden Ansprüche, **dadurch gekennzeichnet, dass** das Widerstandschweißgerät Mittel zum Eingeben und/oder Bestimmen von Blecharten und Blechdicken sowie Mittel zum Bestimmen der Prozessparameter aufweist.

9. Verfahren zum Fügen von Bauteilen, insbesondere zum Widerstandsschweißen und insbesondere mittels eines Widerstandsschweißgerätes nach einem der vorstehenden Ansprüche, umfassend die Schritte:
- Anlegen einer Spannung an zumindest einem zu fügenden Bauteil mittels zweier Elektroden, so dass ein Strom fließt, der zumindest zu einer Erwärmung des zu fügenden Bauteils führt,
- Messen eines Strom-Zeit und/oder Spannung-Zeit-Verlaufs,
- Bestimmen der Materialart des zumindest einen zu fügenden Bauteils anhand des Strom-Zeit und/oder Spannung-Zeit-Verlaufs.

10. Verfahren zum Fügen von Bauteilen nach dem vorstehenden Anspruch, **dadurch gekennzeichnet, dass** über den Strom-Zeit und/oder Spannung-Zeit-Verlauf ein Widerstandsverlauf, insbesondere ein Impedanzverlauf ermittelt wird.

11. Verfahren zum Fügen von Bauteilen nach einem der vorstehenden Ansprüche, **dadurch gekennzeichnet, dass** unter Berücksichtigung der Materialart zumindest eines zu fügenden Bauteils die Prozessparameter des Fügeverfahrens bestimmt werden.

12. Verfahren zum Fügen von Bauteilen nach einem der vorstehenden Ansprüche, **dadurch gekennzeichnet, dass** ein Widerstandsverlauf, insbesondere ein Impedanzverlauf an einem Bildschirm angezeigt wird.

13. Verfahren zum Fügen von Bauteilen nach einem der vorstehenden Ansprüche, **dadurch gekennzeichnet, dass** die Materialart des zumindest einen zu fügenden Bauteils durch einen Vergleich des Widerstandsverlaufs mit Referenzwiderstandsverläufen bestimmt werden.

14. Verfahren zum Fügen von Bauteilen nach einem der vorstehenden Ansprüche, **dadurch gekennzeichnet, dass** die Dicke des und/oder der Bauteile gemessen wird.

15. Verfahren zum Fügen von Bauteilen nach einem der vorstehenden Ansprüche, **dadurch gekennzeichnet, dass** die zu fügenden Bauteile in einer Fügeposition aufeinander gebracht werden, sodann die Spannung an die, insbesondere zwei oder drei zu fügenden Bauteile angelegt wird und ein Widerstandsverlauf der zu fügenden Teile bestimmt wird.

16. Verfahren zum Fügen von Bauteilen nach dem vorstehenden Anspruch, **dadurch gekennzeichnet, dass** aus dem Widerstandsverlauf beider zu fügenden Bauteile der Widerstandsverlauf zumindest eines, bevorzugt aller zu fügenden Bauteile berechnet wird.

17. Verfahren zum Fügen von Bauteilen nach dem vorstehenden Anspruch, **dadurch gekennzeichnet, dass** die Berechnung unter Berücksichtigung von Referenzwiderstandsverläufen vorgenommen wird.

18. Verfahren zum Fügen von Bauteilen nach einem der vorstehenden Ansprüche, **dadurch gekennzeichnet, dass** eine Spannung angelegt wird, so dass ein Strom fließt, der das zu fügende Teil zwischen den Elektroden auf mindestens 300 °C erwärmt.

19. Verfahren zum Fügen von Bauteilen nach einem der vorstehenden Ansprüche, **dadurch gekennzeichnet, dass** die Anpresskraft der Elektroden gemessen und bei der Bestimmung der Materialart verwendet wird.

20. Verfahren zum Fügen von Bauteilen nach einem der vorstehenden Ansprüche, **dadurch gekennzeichnet, dass** der Strom, der aufgrund der angelegten Spannung durch das zumindest eine Bauteil fließt, verändert, insbesondere kontinuierlich, stufenweise oder in Intervallen erhöht und/oder verringert wird.

21. Verfahren zum Fügen von Bauteilen nach einem der vorstehenden Ansprüche, **dadurch gekennzeichnet, dass** der Abstandsverlauf der Elektroden gemessen und bei der Bestimmung der Materialart verwendet wird.

22. Verfahren zum Bestimmen der Art eines Bleches, wobei an dem Blech von beiden Seite mittels zumindest zweier Elektroden eine Spannung angelegt wird, so dass durch das Blech ein Strom fließt, der zumindest zu einer Erwärmung des Bleches führt, der Widerstandsverlauf gemessen und durch einen Vergleich mit Referenzwiderstandsverläufen die Art des Bleches bestimmt wird.

23. Verfahren zum Bestimmen der Art eines Bleches nach dem vorstehenden Anspruch, **dadurch gekennzeichnet, dass** als Widerstand die Impedanz gemessen wird.

24. Verfahren zum Bestimmen der Art eines Bleches nach einem der vorstehenden Ansprüche, **dadurch gekennzeichnet, dass** ein Strom von über 1 kA fließt.
